# EUROPEAN PATENT APPLICATION

(11) **EP 4 738 488 A1**
(43) Date of publication of application: **06.05.2026**
(21) Application number: 24846035.4
(22) Date of filing: 24.07.2024
(51) Int. Cl.: H01M 8/04119

(54) **FUEL CELL HUMIDIFIER HAVING BYPASS-TYPE BAFFLE**

(30) Priority: 26.07.2023 KR 20230097794
(71) Applicant: Kolon Industries, Inc., Seoul 07793 (KR)
(72) Inventor: KIM, In Ho, Seoul 07793 (KR); KIM, Do Woo, Seoul 07793 (KR); AHN, Woong Jeon, Seoul 07793 (KR)
(74) Representative: Vossius & Partner Patentanwälte Rechtsanwälte mbB
(86) International application number: PCT/KR2024/010709
(87) International publication number: WO 2025/023733

(57) **Abstract**

The disclosure relates to a fuel cell humidifier including a bypass-type baffle, a mid-case having an exhaust gas inlet through which exhaust gas discharged from a fuel cell stack flows in and an exhaust gas outlet for discharging the exhaust gas, a cartridge arranged inside the mid-case and including an inner case in which humidification membranes are arranged and fixed portions configured to fix the humidification membranes at one side and another side of the inner case, and a bypass flow path formed between an inner wall of the mid-case and an outer side of the inner case, wherein the baffle is arranged in an inner space of the mid-case to divide the bypass flow path and has a movement hole through which a fluid moves.

## Description

### Technical Field

The disclosure relates to a fuel cell humidifier including a bypass-type baffle, and more particularly, to a fuel cell humidifier including a bypass-type baffle that may reduce differential pressure by bypassing exhaust gas through a bypass flow path and increase an effective area of a humidification membrane by diversifying a fluid movement path through the baffle.

### Background Art

A fuel cell is a power-generating battery that combines hydrogen with oxygen to generate electric power. Unlike general chemical cells, such as dry cells or storage batteries, a fuel cell may continuously generate electric power as long as hydrogen and oxygen are supplied, and also has the advantage of being approximately twice as efficient as an internal combustion engine since heat loss does not occur in the fuel cell.

A fuel cell system includes a stack that is an electricity generation assembly of unit fuel cells consisting of air electrodes and fuel electrodes, an air supply device that supplies air to the fuel cell's air electrodes, and a hydrogen supply device that supplies hydrogen to the fuel cell's fuel electrodes.

In a polymer fuel cell of a fuel cell system, an ion exchange membrane of a membrane electrode assembly (MEA) requires an appropriate amount of moisture to function properly, and to achieve this, an air supply device of the fuel cell system includes a humidifier for humidifying the air supplied to fuel cells.

The humidifier humidifies the dry gas supplied through an air compressor of an air supply system by using moisture in high-temperature and humid exhaust gas discharged from a fuel cell's air electrodes, and supplies the humidified air to the fuel cell's air electrodes.

Fuel cell humidifiers use a membrane humidification method. Fuel cell humidifiers using the membrane humidification method perform membrane humidification through a gas-to-gas moisture exchange between the high-temperature and humid exhaust gas discharged from the fuel cell's air electrodes and the dry gas supplied by an air compressor.

A fuel cell humidifier may include a cartridge in which humidification membranes composed of hollow fiber membranes are arranged in units of modules. Dry gas passes through the hollow fiber membranes through one side and another side of a cartridge, and an opening (window) is provided in the side of the cartridge that opens toward the outside.

Exhaust gas flows into the cartridge through the opening of the cartridge, and the exhaust gas in the cartridge exchanges moisture with the dry gas passing through the hollow fiber membrane.

However, such a cartridge has the following problems. In general, an opening in the side of a cartridge is formed at a point into which exhaust gas flows, and as the amount of exhaust gas is more concentrated at the point into which the exhaust gas flows and a flow rate increases, a humidification membrane is damaged, resulting in reduction of durability.

Also, because a movement path of exhaust gas moving through a cartridge is previously determined, membranes are not used uniformly in sections where exhaust gas flow paths are not determined inside the cartridge. Accordingly, there is a problem in that the humidification efficiency of such fuel cell is reduced because an effective membrane area is reduced and differential pressure increases.

### Disclosure of Invention

### Technical Problem

The disclosure is intended to solve the above-described problem, and more particularly, relates to a fuel cell humidifier including a bypass-type baffle that may reduce differential pressure by bypassing exhaust gas through a bypass flow path and increase an effective area of a humidification membrane by diversifying a fluid movement path through the baffle.

### Solution to Problem

A fuel cell humidifier including a bypass-type baffle according to the disclosure described above includes a mid-case having an exhaust gas inlet through which exhaust gas discharged from a fuel cell stack flows in and an exhaust gas outlet for discharging the exhaust gas; a cartridge arranged inside the mid-case and including an inner case in which humidification membranes are arranged and fixed portions configured to fix the humidification membranes at one side and another side of the inner case; a bypass flow path formed between an inner wall of the mid-case and an outer side of the inner case; and the bypass-type baffle arranged in an inner space of the mid-case and dividing the bypass flow path, wherein the bypass-type baffle has a movement hole through which a fluid moves.

In the fuel cell humidifier including the bypass-type baffle according to the disclosure described above, a side surface of the inner case may have openings continuously arranged from one side of the inner case to another side of the inner case.

In the fuel cell humidifier including the bypass-type baffle according to the disclosure described above, the bypass flow path may include a first bypass flow path formed between an upper portion of the inner wall of the mid-case and an upper portion of the outer side of the inner case, and a second bypass flow path formed between a lower portion of the inner wall of the mid-case and a lower portion of the outer side of the inner case, the bypass-type baffle may have a plate shape and divides the first bypass flow path from the second bypass flow path, and the movement hole in the bypass-type baffle may be provided at a point where one of the first bypass flow path and the second bypass flow path is formed.

In the fuel cell humidifier including the bypass-type baffle according to the disclosure described above, the bypass-type baffle may have a plate shape and have a mounting hole into which the inner case is inserted, and the movement hole may be provided in one of an upper portion and a lower portion of the mounting hole.

In the fuel cell humidifier including the bypass-type baffle according to the disclosure described above, the bypass-type baffle may include a first baffle having the movement hole only in the upper portion of the mounting hole, and a second baffle having the movement hole only in the lower portion of the mounting hole, and the first baffle and the second baffle may be arranged in the inner space of the mid-case.

In the fuel cell humidifier including the bypass-type baffle according to the disclosure described above, the first baffle and the second baffle may be alternately arranged in the inner space of the mid-case.

In the fuel cell humidifier including the bypass-type baffle according to the disclosure described above, the bypass-type baffle may include a first baffle having the movement hole only in the upper portion of the mounting hole, and a plurality of first baffles may be arranged in the inner space of the mid-case such that the first bypass channel is open and the second bypass channel is closed.

In the fuel cell humidifier including the bypass-type baffle according to the disclosure described above, the bypass-type baffle may include a second baffle having the movement hole only in the lower portion of the mounting hole, and a plurality of second baffles may be arranged in the inner space of the mid-case such that the second bypass flow path is open and the first bypass flow path is closed.

### Advantageous Effects of Invention

The disclosure relates to a fuel cell humidifier including a bypass-type baffle, and the fuel cell humidifier has an advantage of reducing differential pressure by forming a permanent bypass flow path between an inner case and an inner wall of a mid-case of a cartridge and bypassing exhaust gas.

Also, the fuel cell humidifier including the bypass-type baffle according to the embodiment of the disclosure may increase an effective area of a humidification membrane by diversifying a fluid movement path through a baffle that divides bypass flow paths, thereby improving humidification efficiency and reducing differential pressure.

### Brief Description of Drawings

FIG. 1 is an exploded perspective view of a fuel cell humidifier including a bypass-type baffle according to an embodiment of the disclosure.
FIG. 2 is a view illustrating a cartridge mounted in a mid-case according to an embodiment of the disclosure.
FIG. 3 is a view illustrating a cartridge in which openings are formed in the entire side surface of an inner case, according to an embodiment of the disclosure.
FIG. 4 is a view illustrating a first baffle and a second baffle alternately arranged within a mid-case to change a movement path of exhaust gas, according to an embodiment of the disclosure.
FIG. 5 is a view illustrating that only the first baffle is arranged within a mid-case such that a first bypass flow path is open and a second bypass flow path is closed, according to an embodiment of the disclosure.
FIG. 6 is a view illustrating that only the second baffle is arranged within a mid-case such that a second bypass flow path is open and a first bypass flow path is closed, according to an embodiment of the disclosure.

### Mode for the Invention

The present specification clarifies the scope of the disclosure and describes principles of the disclosure and discloses embodiments to enable those skilled in the art to which the disclosure belongs to practice the disclosure. The disclosed embodiments may be implemented in various forms.

The terms "include" and "may include", which may be used in various embodiments of the disclosure, indicate presence of the disclosed functions, operations, components, and so on and do not limit one or more additional functions, operations, components, and so on. Also, in various embodiments of the disclosure, the terms "include", "have", and so on are intended to indicate the presence of features, numbers, steps, operations, constituent elements, components, or combinations thereof described in the specification, but should be understood not to preclude the presence or addition of one or more other features, numbers, steps, operations, constituent elements, components, or combinations thereof.

When a component is referred to as being "connected or coupled" to another component, it should be understood that the component may be directly connected or coupled to another component, but that there may also be another component between the components. Conversely, when a component is referred to as being "directly connected" or "directly coupled" to another component, it should be understood that no other components exist between the components.

While the terms "first", "second," and so on used herein may be used to describe various components, the components should not be limited by the terms. The terms are used solely to distinguish one component from another component.

The disclosure relates to a fuel cell humidifier including a bypass-type baffle, and relates to a fuel cell humidifier including a bypass-type baffle that may reduce differential pressure by bypassing exhaust gas through a bypass flow path and increase an effective area of a humidification membrane by diversifying a fluid movement path through the baffle. Hereinafter, preferred embodiments of the disclosure will be described in detail with reference to the attached drawings.

A fuel cell humidifier including a bypass-type baffle according to an embodiment of the disclosure includes a mid-case 110, a cartridge 130, a bypass flow path 150, and a baffle 160.

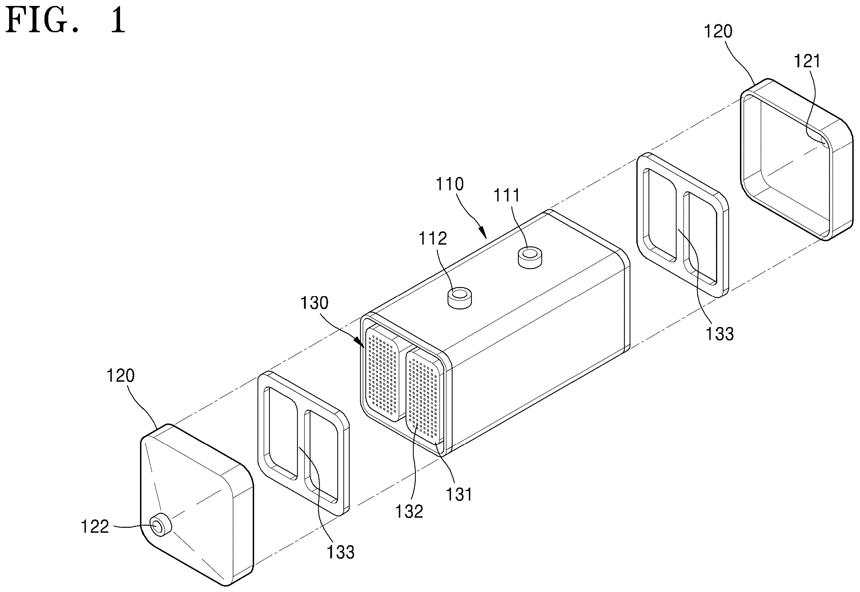

The fuel cell humidifier according to an embodiment of the disclosure may humidify gas to be supplied to a fuel cell stack. Referring to FIG. 1, the mid-case 110 may be an external housing of the humidifier, and a humidification membrane 132 for humidifying air may be provided inside the mid-case 110.

The mid-case 110 may have an exhaust gas inlet 111 and an exhaust gas outlet 112. The mid-case 110 may have an exhaust gas inlet 111 into which high-temperature and humid exhaust gas to be discharged from a fuel cell stack may flow, and an exhaust gas outlet 112 from which the exhaust gas may flow out.

According to an embodiment of the disclosure, end caps 120 may be coupled to the mid-case 110. The end caps 120 are coupled respectively to one side and the other side of the mid-case 110.

The end caps 120 may respectively have an air inlet 121 that may supply dry air to the mid-case 110 and an air outlet 122 that may discharge the humidified air from the mid-case 110.

Specifically, the end cap 120 coupled to one side of the mid-case 110 may have the air outlet 122, and the end cap 120 coupled to the other side of the mid-case 110 may have the air inlet 121. The air outlet 122 may be connected to a fuel cell stack, and the humidified air discharged through the air outlet 122 may be supplied to the fuel cell stack.

High-temperature and humid exhaust gas discharged from the fuel cell stack may flow into the mid-case 110 through the exhaust gas inlet 111 formed in the mid-case 110.

The exhaust gas flowed into the mid-case 110 supplies moisture to the dry air supplied to the mid-case 110 through the air inlet 121 of the end cap 120.

The exhaust gas which supplies moisture to the dry air may be discharged to the outside through the exhaust gas outlet 112 formed in the mid-case 110. The dry air humidified through the mid-case 110 is discharged through the air outlet 122, and the humidified air is supplied to the fuel cell stack.

According to an embodiment of the disclosure, the end caps 120 may be coupled respectively to one side and the other side of the mid-case 110, and the end cap 120 may also be formed integrally with the mid-case 110.

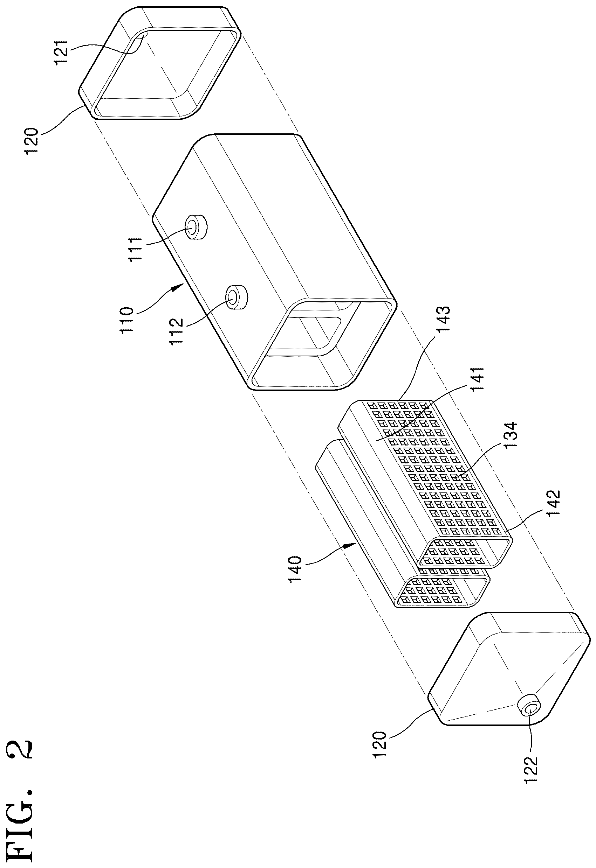

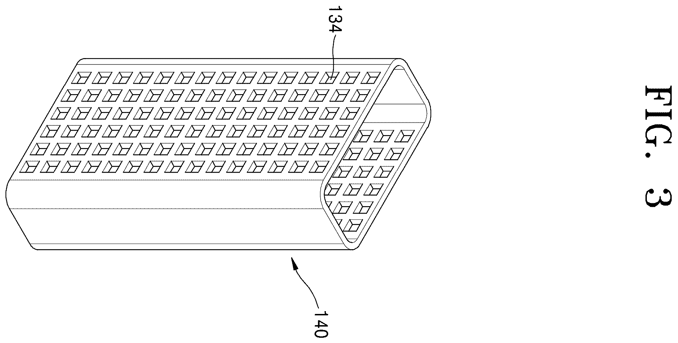

Referring to FIGS. 2 and 3, the cartridge 130 may include an inner case 140 in which the humidification membrane 132 is arranged, and fixed portions 131 that respectively fix two humidification membranes 132 to one side and the other side of the inner case 140.

The cartridge 130 may be arranged inside the mid-case 110. Referring to FIG. 2, the inner case 140 may have a space therein, and one or more inner cases 140 may be arranged inside the mid-case 110.

The humidification membrane 132 may be arranged inside the inner case 140. The humidification membrane 132 may exchange moisture between exhaust gas and dry air, and one or more humidification membranes 132 may be provided inside the inner case 140.

According to an embodiment of the disclosure, the humidification membrane 132 may include a hollow fiber membrane. However, the disclosure is not limited thereto, and the humidification membrane 132 may include various types of humidification membranes as long as the humidification membrane may exchange moisture between exhaust gas and dry air.

The fixed portion 131 fixes the humidification membrane 132 to the inner case 140 on one side of the inner case 140, and the fixed portion 131 may be composed of a potting layer.

The fixed portion 131 may be formed on one side of each of a plurality of humidification membranes 132, and the one side of each of the plurality of humidification membranes 132 may be fixed to one side of the inner case 140 through the fixed portion 131.

Also, the fixed portion 131 may also fix each of the plurality of humidification membranes 132 to the inner case 140 on the other side of the inner case 140. The fixed portion 131 may also be formed on the other side of each of the plurality of humidification membranes 132, and the other side of each of the plurality of humidification membranes 132 may be fixed to the other side of the inner case 140 through the fixed portion 131.

The fixed portions 131 may isolate an inner space of the inner case 140, and by providing the fixed portions 131 respectively on one side and the other side of the inner case 140, dry air may only flow through the insides of the humidification membranes 132 or hollow spaces of the humidification membranes 132.

The fuel cell humidifier including a bypass-type baffle according to an embodiment of the disclosure may further include a packing member 133. Referring to FIG. 1, the packing member 133 is inserted between the cartridge 130 and the mid-case 110 to seal a space between the cartridge 130 and the mid-case 110.

The packing member 133 may prevent direct mixing of the dry air supplied through the end cap 120 with the exhaust gas supplied to the mid-case 110.

Referring to FIG. 1, packing members 133 are provided respectively on one side and the other side of the cartridge 130 to divide and isolate a point through which dry air flows in and out from a point through which exhaust gas flows in and out.

By dividing the point where dry air flows in and out through the packing member 133 from the point where exhaust gas flow in and out therethrough, the dry air supplied through the end cap 120 and the exhaust gas supplied to the mid-case 110 may be prevented from being directly mixed with each other.

The packing member 133 may be composed of a rubber member but is not limited thereto, and the packing member 133 may include various members. For example, the packing member 133 may include a soft member or a hard member, and may also include a metal member.

Referring to FIG. 3, an opening 134 (window) may be provided continuously along the side surface of the inner case 140 according to an embodiment of the disclosure from one side of the inner case 140 to the other side of the inner case 140. Openings 134 may be open to the outside, and exhaust gas may flow into the cartridge 130 through the openings 134.

The openings 134 may be provided only on one side and the other side of the inner case 140. However, in such a case, the inflow of exhaust gas is concentrated on the openings 134 provided on one side and the other side of the inner case 140, resulting in fast flow of the exhaust gas in the openings 134, and accordingly, a problem may arise that the humidification membrane may be damaged.

To prevent this problem, the fuel cell humidifier including a bypass-type baffle according to an embodiment of the disclosure may have openings 134 (windows) continuously arranged from one side of the inner case 140 to the other side of the inner case 140. That is, the openings 134 may be provided in the entire side surface of the inner case 140.

In this way, by providing the openings 134 in the entire side surface of the inner case 140, it is possible to prevent a flow amount from being concentrated on some openings 134 to cause a flow rate to increase.

When the openings 134 are provided in the entire side surface of the inner case 140, humidification efficiency may be improved by causing exhaust gas to flow into various points of the openings 134. To this end, the fuel cell humidifier including a bypass-type baffle according to an embodiment of the disclosure may include the bypass flow path 150 and the baffle 160.

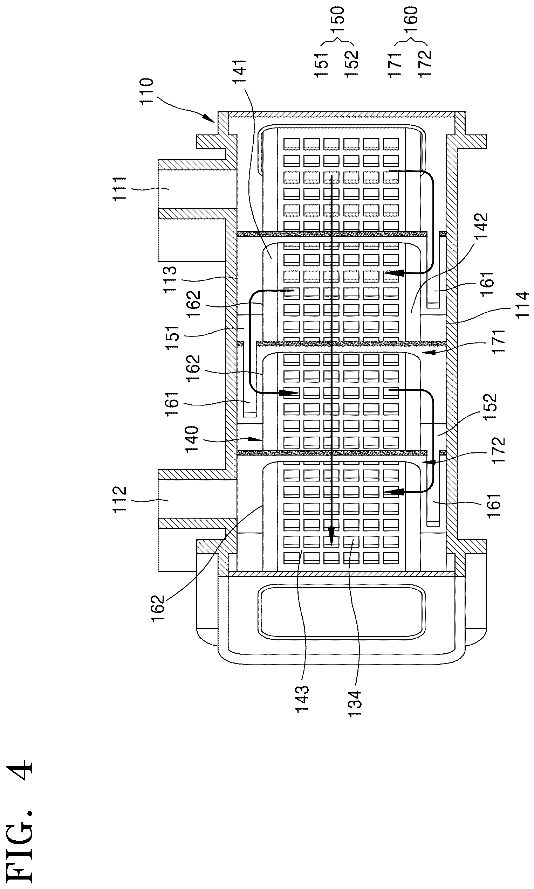

Referring to FIG. 4, the bypass flow path 150 may be formed between an inner wall of the mid-case 110 and an outer side of the inner case 140. The bypass flow path 150 may be formed between an inner wall of the mid-case 110 and an outer side of the inner case 140, and exhaust gas may flow on the outside of the cartridge 130 through the bypass flow path 150.

The bypass flow path 150 may be a permanent bypass flow path formed between the inner case 140 of the cartridge 130 and an inner wall of the mid-case 110, and exhaust gas may be bypassed through the bypass flow path 150.

The fuel cell humidifier including a bypass-type baffle according to an embodiment of the disclosure may reduce differential pressure by forming the bypass flow path 150 to bypass exhaust gas.

According to an embodiment of the disclosure, the bypass flow path 150 may include a first bypass flow path 151 formed between an upper inner wall 113 of the mid-case 110 and an outer side of an upper portion 141 of the inner case 140, and a second bypass flow path 152 formed between a lower inner wall 114 of the mid-case 110 and an outer side of a lower portion 142 of the inner case 140.

Here, the upper inner wall 113 of the mid-case 110 may be an inner wall provided in an upper portion of the mid-case 110 based on FIG. 4, and the lower inner wall 114 of the mid-case 110 may be an inner wall provided in a lower portion of the mid-case 110 based on FIG. 4.

Also, the upper portion 141 of the inner case 140 may be an upper part of the inner case 140 based on FIG. 4, and the lower portion 142 of the inner case 140 may be a lower part of the inner case 140 based on FIG. 4.

A side surface 143 of the inner case 140 may be a surface formed between the upper portion 141 and the lower portion 142 of the inner case 140 based on FIG. 4, and the openings 134 may be provided in the entire side surface 143 of the inner case 140.

Referring to FIG. 4, the baffle 160 may be arranged in an inner space of the mid-case 110 to divide the bypass flow path 150. The baffle 160 may have a plate shape and may be installed inside the mid-case 110, and accordingly, the bypass flow path 150 may be divided through the baffle 160 having the plate shape.

Referring to FIG. 4, the baffle 160 may have a movement hole 161 through which a fluid may move, and the fluid may move through the movement hole 161. The movement hole 161 may penetrate the baffle 160.

The baffle 160 may include a point where the movement hole 161 is provided and a point where the movement hole 161 is not provided. A fluid may move through the point where the movement hole 161 is provided in the baffle 160, and may not move through the point where the movement hole 161 is not provided in the baffle 160.

When the bypass flow path 150 is divided by the baffle 160, a path through which a fluid moves may be changed by changing a point where the movement hole 161 is provided, and accordingly, a fluid movement path may be diversified.

Specifically, by dividing the bypass flow path 150 through the baffle 160 and changing a point where the movement hole 161 is provided, a path along which exhaust gas moves between the bypass flow path 150 and the openings 134 may be changed.

Referring to FIG. 4, a mounting hole 162 into which the inner case 140 is inserted may be provided inside the baffle 160 according to an embodiment of the disclosure. The mounting hole 162 may penetrate the baffle 160, and the inner case 140 may be inserted into the mounting hole 162.

When the baffle 160 is arranged inside the mid-case 110, the baffle 160 may be arranged such that the inner case 140 is inserted through the mounting hole 162 of the baffle 160.

According to an embodiment of the disclosure, the movement hole 161 of the baffle 160 may be provided in an upper portion or a lower portion of the mounting hole 162. The movement hole 161 of the baffle 160 may be selectively provided in the upper portion or the lower portion of the mounting hole 162. When necessary, the movement hole 161 may also be provided in both the upper portion and the lower portion of the mounting hole 162.

Referring to FIG. 4, a plurality of baffles 160 may be arranged inside the mid-case 110, and the baffles 160 may divide the first bypass flow path 151 from the second bypass flow path 152.

The movement hole 161 of the baffle 160 may be provided at a point where the first bypass flow path 151 or the second bypass flow path 152 is formed, and accordingly, a path of a fluid passing through the first bypass flow path 151 and the second bypass flow path 152 may be changed.

According to an embodiment of the disclosure, the baffle 160 may include a first baffle 171 in which the movement hole 161 is provided only in an upper portion of the mounting hole 162, and a second baffle 172 in which the movement hole 161 is provided only in the lower portion of the mounting hole 162.

When the first bypass flow path 151 is divided from the second bypass flow path 152 through the first baffle 171 in which the movement hole 161 is provided only in an upper portion of the mounting hole 162, the first bypass flow path 151 may be in a state in which a fluid may move through the movement hole 161, and the second bypass flow path 152 may be in a blocked state in which a fluid may not move.

When the first bypass flow path 151 is divided from the second bypass flow path 152 through the second baffle 172 in which the movement hole 161 is provided only in the lower portion of the mounting hole 162, the second bypass flow path 152 may be in a state in which a fluid may move through the movement hole 161, and the first bypass flow path 151 may be in a blocked state in which a fluid may not move.

A plurality of baffles 160 may be arranged in an inner space of the mid-case 110, and one or more first baffles 171 and one or more second baffles 172 may be arranged in the inner space of the mid-case 110. By arranging the first baffles 171 and the second baffles 172 in the inner space of the mid-case 110, a movement path of exhaust gas may be diversified.

Referring to FIG. 4, the first baffles 171 and the second baffles 172 may be alternately arranged in the inner space of the mid-case 110 according to an embodiment of the disclosure.

When the first baffles 171 and the second baffles 172 are alternately arranged inside the mid-case 110, as illustrated in FIG. 4, the exhaust gas flowed in through the exhaust gas inlet 111 alternately moves between an upper portion and a lower portion of the outside of the cartridge 130 through the first bypass flow path 151 and the second bypass flow path 152.

When the exhaust gas alternately moves between the upper portion and the lower portion of the outside of the cartridge 130 through the first bypass flow path 151 and the second bypass flow path 152, the exhaust gas may flow in through the entire side surface of the inner case 140 because the openings 134 are provided in the entire side surface of the inner case 140.

Because exhaust gas may flow in through the entire side surface of the inner case 140 through the first baffle 171, the second baffle 172, the first bypass flow path 151, and the second bypass flow path 152, an effective area of the humidification membrane 132 may increase. Accordingly, humidification efficiency of the fuel cell humidifier may be improved while differential pressure is reduced.

That is, the fuel cell humidifier including a bypass-type baffle according to an embodiment of the disclosure uses the inner case 140 having the openings 134 provided in the entire side surface, and changes a movement path of the exhaust gas moving on the first bypass flow path 151 and the second bypass flow path 152 through the first baffle 171 and the second baffle 172, and accordingly, an effective area of the humidification membrane 132 may increase, resulting in improvement of humidification efficiency.

In an inner space of the mid-case 110 of the fuel cell humidifier including a bypass-type baffle according to an embodiment of the disclosure, a plurality of first baffles 171 having the movement holes 161 provided only in an upper portion of the mounting hole 162 may also be arranged.

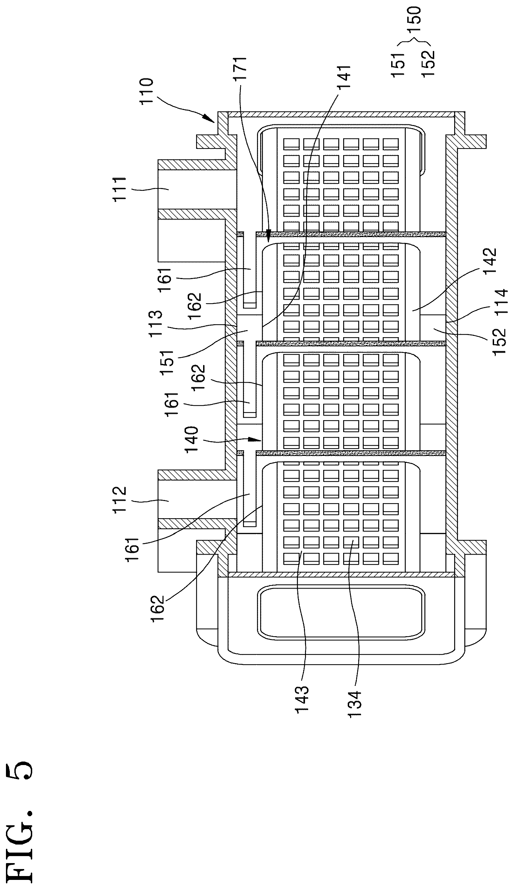

Referring to FIG. 5, only a plurality of first baffles 171 may be arranged in an inner space of the mid-case 110, and accordingly, the first bypass flow path 151 is open, and the second bypass flow path 152 is closed.

Also, in the inner space of the mid-case 110 of a fuel cell humidifier including a bypass-type baffle according to an embodiment of the disclosure, a plurality of second baffles 172, each having the movement hole 161 provided only in a lower portion of the mounting hole 162, may be arranged.

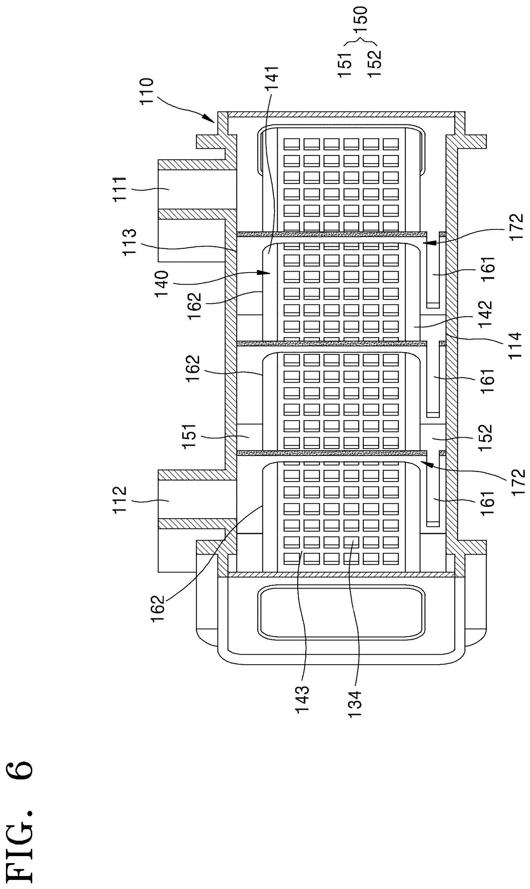

Referring to FIG. 6, only a plurality of second baffles 172 may be arranged in an inner space of the mid-case 110, and accordingly, the second bypass flow path 152 is open, and the first bypass flow path 151 is closed.

In a fuel cell humidifier including a bypass-type baffle according to an embodiment of the disclosure, a movement path of exhaust gas moving through the first bypass flow path 151 and the second bypass flow path 152 may be changed depending on positions and shapes of the exhaust gas inlet 111 and the exhaust gas outlet 112 and on hydraulic pressure of the exhaust gas.

A fuel cell humidifier including a bypass-type baffle according to an embodiment of the disclosure may open the first bypass flow path 151 and close the second bypass flow path 152 through the first baffle 171 as illustrated in FIG. 5, and accordingly, exhaust gas may move through only the first bypass flow path 151 formed in an upper portion of the inner case 140.

Also, a fuel cell humidifier including a bypass-type baffle according to an embodiment of the disclosure may open the second bypass flow path 152 and close the first bypass flow path 151 through the second baffle 172 as illustrated in FIG. 6, and accordingly, exhaust gas may also move through only the second bypass flow path 152 formed in a lower portion of the inner case 140.

The fuel cell humidifier including a bypass-type baffle according to the embodiment of the disclosure described above has following effects.

The fuel cell humidifier including the bypass-type baffle according to the embodiment of the disclosure has an advantage of reducing differential pressure by forming a permanent bypass flow path between an inner case and an inner wall of a mid-case of a cartridge and bypassing exhaust gas.

Also, the fuel cell humidifier including the bypass-type baffle according to the embodiment of the disclosure may increase an effective area of a humidification membrane by diversifying a fluid movement path through a baffle that divides bypass flow paths, thereby improving humidification efficiency and reducing differential pressure.

While the disclosure is described with reference to the embodiments illustrated in the drawings, these are merely examples, and those skilled in the art will appreciate that various modifications and variations of the embodiments may be derived therefrom. Therefore, the true scope of protection of the disclosure should be defined by the technical spirit of the appended claims.

## Claims

1. A fuel cell humidifier including a bypass-type baffle, the fuel cell humidifier comprising:
a mid-case having an exhaust gas inlet through which exhaust gas discharged from a fuel cell stack flows in and an exhaust gas outlet for discharging the exhaust gas;
a cartridge arranged inside the mid-case and including an inner case in which humidification membranes are arranged and fixed portions configured to fix the humidification membranes at one side and another side of the inner case;
a bypass flow path formed between an inner wall of the mid-case and an outer side of the inner case; and
the bypass-type baffle arranged in an inner space of the mid-case and dividing the bypass flow path,
wherein the bypass-type baffle has a movement hole through which a fluid moves.

2. The fuel cell humidifier of claim 1, wherein a side surface of the inner case has openings continuously arranged from one side of the inner case to another side of the inner case.

3. The fuel cell humidifier of claim 1, wherein
the bypass flow path includes a first bypass flow path formed between an upper portion of the inner wall of the mid-case and an upper portion of the outer side of the inner case, and a second bypass flow path formed between a lower portion of the inner wall of the mid-case and a lower portion of the outer side of the inner case,
the bypass-type baffle has a plate shape and divides the first bypass flow path from the second bypass flow path, and
the movement hole in the bypass-type baffle is provided at a point where one of the first bypass flow path and the second bypass flow path is formed.

4. The fuel cell humidifier of claim 3, wherein
the bypass-type baffle has a plate shape and has a mounting hole into which the inner case is inserted, and
the movement hole is provided in one of an upper portion and a lower portion of the mounting hole.

5. The fuel cell humidifier of claim 4, wherein
the bypass-type baffle includes a first baffle having the movement hole only in the upper portion of the mounting hole, and a second baffle having the movement hole only in the lower portion of the mounting hole, and
the first baffle and the second baffle are arranged in the inner space of the mid-case.

6. The fuel cell humidifier of claim 5, wherein the first baffle and the second baffle are alternately arranged in the inner space of the mid-case.

7. The fuel cell humidifier of claim 4, wherein
the bypass-type baffle includes a first baffle having the movement hole only in the upper portion of the mounting hole, and
a plurality of first baffles are arranged in the inner space of the mid-case such that the first bypass channel is open and the second bypass channel is closed.

8. The fuel cell humidifier of claim 4, wherein
the bypass-type baffle includes a second baffle having the movement hole only in the lower portion of the mounting hole, and
a plurality of second baffles are arranged in the inner space of the mid-case such that the second bypass flow path is open and the first bypass flow path is closed.
